# EUROPEAN PATENT APPLICATION

(11) **EP 1 021 027 A2**
(43) Date of publication of application: **19.07.2000**
(21) Application number: 99310210.2
(22) Date of filing: 17.12.1999
(51) Int. Cl.: H04M 3/50

(54) **Method and apparatus for intelligent call handling**

(30) Priority: 23.12.1998 US 219495
(71) Applicant: NORTEL NETWORKS CORPORATION, Montreal, Quebec H2Y 3Y4 (CA)
(72) Inventor: Myers, John Christopher, Toronto, Ontario M5E 1T4 (CA); Breslin, Jerome, Toronto, Ontario M4T 1J9 (CA)
(74) Representative: Maury, Richard Philip

(57) **Abstract**

A call is answered by an automated call answering system. The system generates an intelligent beep (I-Beep), which is a distinct human and machine recognizable tone indicating intelligent call handling capability. If the caller is human, the I-Beep is a signal that the caller may enter commands to request that the intelligent system perform advanced operations beyond simply recording a message. If the caller is employing an intelligent system, the I-Beep is a signal to the calling system that it may respond with an indication that an intelligent device is listening in. The two systems may then engage in some form of data exchange. The I-Beep protocol may be used between the two systems to exchange data such as personal information, photos, web home page addresses, etc. When a call is placed by an intelligent call handling system, the system generates an I-Beep to determine whether the called system has intelligent call handling capability. An affirmative response from the called system may initiate an exchange of data between the two systems.

## Description

### FIELD OF THE INVENTION

The present invention relates to call handling methods and systems which provide, in one embodiment, an intelligent call answering capability.

### BACKGROUND OF THE INVENTION

Telephone answering systems serve the primary function of recording a message when the party for whom a call is intended does not answer the call in person.

In the event of an incoming call at a telephone switch of a system equipped with a telephone answering system, the telephone answering system may monitor the progress of the call. If the intended telephone is busy, or if the intended telephone is not answered after a predetermined number of rings, the telephone answering system might answer the call and play a greeting.

In most systems, for a particular called telephone, the same greeting is played to all callers. In some systems, custom audio greetings can be played based on calling line identification, time of day, etc. These add some value, but can be difficult to set up and maintain. Other systems may be able to supply additional information in response to the caller entering a specific dual tone multifrequency (DTMF) signal or password. In the latter case, the caller is required to know that this can be done and the necessary signal or password.

### SUMMARY OF THE INVENTION

The method of the subject invention permits an intelligent automated call answering system to create and use an intelligent beep (I-Beep), which is a distinct human and machine recognizable indication (e.g., a tone). When a human caller encounters an I-Beep, it is a signal that the caller may enter commands to request that the intelligent system perform advanced operations beyond simply recording a message. When a machine encounters an I-Beep, it can signal back to the intelligent answering system that an intelligent device is listening in. An I-Beep protocol may be used between the two machines to exchange data such as personal information, photos, web home page addresses, etc. The intelligent call answering system may also poll a machine encountered on an outgoing call for I-Beep related capability and undertake a data exchange with a machine having such capability.

In accordance with an aspect of the present invention there is provided a method for handling a call over a voice link including indicating over the voice link an intelligent information exchange capability, receiving over the voice link an indication, determining from the received indication whether a caller is a human caller or an intelligent machine with a compatible intelligent information exchange capability and further processing based on the determination. In another aspect of the invention a call handling system may be provided to carry out the method. In another aspect of the invention a software medium permits a general purpose computer to carry out the method.

In accordance with another aspect of the present invention there is provided a method for handling a call including indicating, to a communication apparatus, an intelligent information exchange capability. The method further includes receiving, from the communication apparatus, an indication of a compatible intelligent information exchange capability, switching, responsive to the communication apparatus indication, from a voice mode to a data mode and sending data to the communication apparatus.

In accordance with still further aspect of the present invention there is provided a method for handling a call over a voice link, including announcing in a voice band over the link an intelligent information exchange capability with an announcement modulated with data which may be extracted from the announcement.

### BRIEF DESCRIPTION OF THE DRAWINGS

In the figures which illustrate example embodiments of this invention:

FIG. **1** schematically illustrates a telecommunication system.

FIG. **2** illustrates, in a flow diagram, a procedure for announcing intelligent call handling capability in an embodiment of the invention.

FIG. **3** illustrates, in a flow diagram, a procedure for polling for intelligent call handling capability in an embodiment of the invention.

### DETAILED DESCRIPTION OF THE PREFERRED EMBODIMENTS

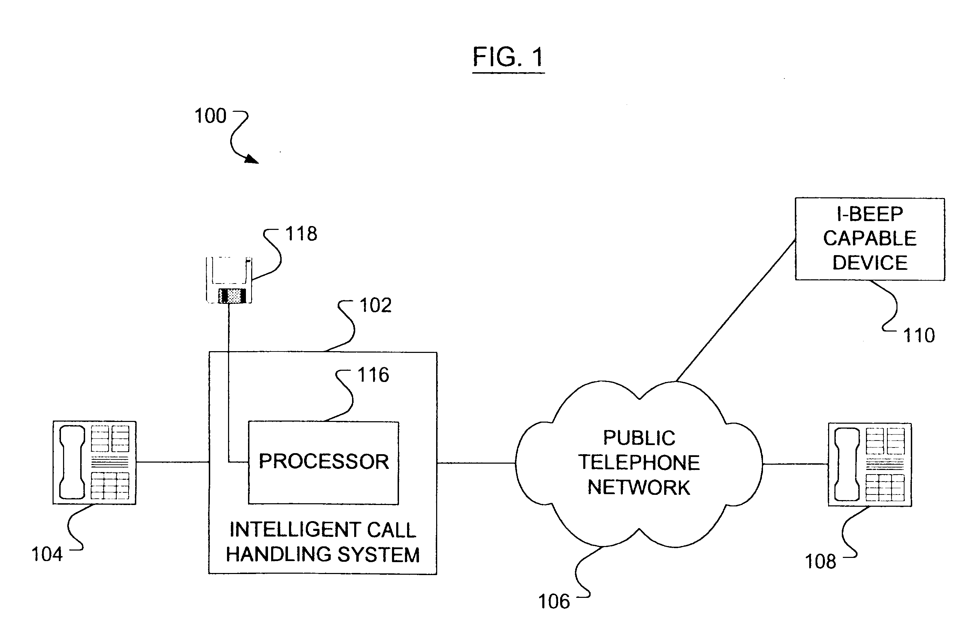

Illustrated in FIG. **1**, a telecommunication system **100** comprises a telephone station apparatus **104** connected to a public switched telephone network (PSTN) **106** through an intelligent call handling system **102**. A second telephone station apparatus **108** and an I-Beep capable device **110** are also connected to PSTN **106**. Intelligent call handling system **102** includes a processor **116** loaded with intelligent call handling software for executing the method of this invention from software medium **118** which could be a disk, a tape, a chip or a random access memory containing a file downloadable from a remote source.

The I-Beep capable device **110** could, for example, be a mobile phone, perhaps equipped with a display for web pages, an etherset on an Internet protocol private branch exchange (PBX), a general purpose computer equipped with a modem and/or another dialling device, or a telephone station apparatus connected to an intelligent telephone answering system or intelligent PBX.

In overview and with reference to FIG. **1**, the operation of the system may proceed as follows. A calling party or calling device places a call over a voice link to a called party at telephone station apparatus **104**. In the event that called telephone station apparatus **104** is busy or the called party does not answer the call, control of the call is transferred to intelligent call handling system **102**. Intelligent call handling system **102** announces, through use of an "intelligent beep" (hereafter referred to as an "I-Beep"), intelligent call handling capability on a connection to the calling party. The announcement may then be followed by a greeting as determined by the called party. Upon reception of the I-Beep announcement over a voice link, the calling party or calling device may reply, in the case of a calling party, indicating a desire for intelligent call handling and in the case of a machine, indicating intelligent call handling capability. In either case, the nature of the indication allows intelligent call handling system **102** to determine whether the reply was from a human or machine and an exchange of information may ensue.

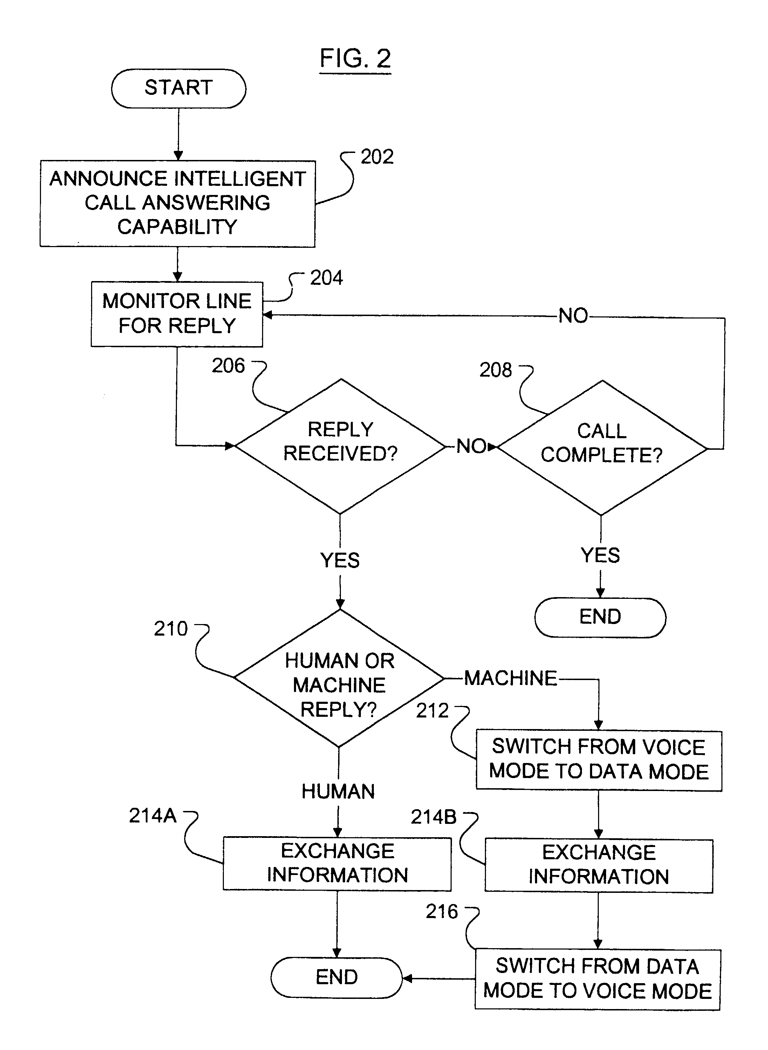

Referring to FIG. **2** in conjunction with FIG. **1**, there is illustrated in a flow diagram the logic followed by intelligent call handling system **102** for an incoming call. If called telephone station apparatus **104** is busy or does not answer after a predetermined number of rings, intelligent call handling system **102** picks up the call and announces intelligent call handling capability to a calling party with an I-Beep announcement (step **202**). The I-Beep announcement could be a sound such as a two tone chime, recognizable by both human and machine as an indication of I-Beep capability. For the duration of the call (i.e., as a greeting is played and message recorded), processor **116** monitors the connection for a reply in accordance with an I-Beep protocol (step **204**). If the call ends before a reply has been received (step **208**), the procedure is complete. If an I-Beep protocol reply is received (step **206**) at some time during the call, a determination is then made with regard to the source of the reply, human or machine (step **210**). A reply may be generated, for instance, by I-Beep capable device **110**. For example, device 110 could generate a particular tone spectrum in reply. Alternatively, a reply may be generated by a calling party at telephone station apparatus **108** using appropriate DTMF signals or voice commands. It will be appreciated that a reply protocol may be chosen from a range of possibilities.

If the received reply is machine generated, intelligent call handling system **102** switches from voice mode to data mode (step **212**). After switching modes, information may be sent to, or exchanged between, intelligent call handling system **102** and I-Beep capable device **110** (step **214B**) using an I-Beep specific protocol or any known information exchange protocol. Following the information exchange, intelligent call handling system **102** switches from data mode back to voice mode (step 216). As, or after, the I-Beep information exchange is performed between machines, call answering may proceed normally, including playing of a greeting and recording of a message.

The switching to data mode for data exchange could involve switching to a separate channel (as, for example, a control channel in the case of common channel signalling), switching to a frequency outside the voice band (as is used in Asynchronous Digital Subscriber Lines) or, with an end-to-end digital network (ISDN), simply switching to send data packets down the line rather than voice packets. For example, in the case of Internet Protocol (IP) telephony, data packets may be exchanged along with voice packets. Further, the switch to data mode could simply be a switch to sending acoustically encoded data in the voice band and occur quickly enough so as not to interfere significantly with the continuation of the call. In the case of a human generated reply, which may be a voice command, information exchange may proceed (step **214A**) without switching modes.

If information is sent from machine to machine, I-Beep capable device **110** may receive a uniform resource locator (URL: i.e., a web page address) relating to the called party. The URL could then be passed to the calling party's computer terminal and opened by a browser to show information about the called party such as a photo, a schedule, business information, personal information and links to further related information. If the information exchange occurs from machine to human, a caller might hear, for example: "The person at extension 33517 is not available to take your call. To leave a message press 1 now; to hear a list of further options press 2 now." Further options may include receiving an audio indication of the user's schedule for the day or gaining entry to a personal information system available only to those possessed of the knowledge of a PIN (personal identification number).

In one embodiment, intelligent call handling system **102** announces intelligent call handling capability to a calling device by sending a DTMF military tone "A" followed by a DTMF military tone "D". If a calling device recognizes this sequence as an I-Beep, it responds by sending an Internet Protocol (IP) address in decimal notation encoded using DTMF tones. The IP address may be the address of the calling device or the address of another device that is accessible to the user of the calling device. Upon reception of the IP address, intelligent call handling system **102** may establish a parallel connection with the calling party via a connection over a data network to the device specified by the IP address. Note that the calling device may mute the signal that is heard by the calling party while the calling device sends an IP address to the called system.

It will be appreciated that an I-Beep announcement tone or chime may be modulated to supply information, such as a URL, to an I-Beep capable device. In such case, unless the I-Beep capable device responds with an I-Beep protocol reply, this is all the information which is sent from the call answering machine to the I-Beep capable machine.

In an alternative embodiment, telephone station apparatus **104** places a call to I-Beep capable device **110**. Intelligent call handling system **102** polls, using an I-Beep protocol, I-Beep capable device **110** for intelligent call handling capability. A suitable reply from I-Beep capable device **110** initiates an exchange of information.

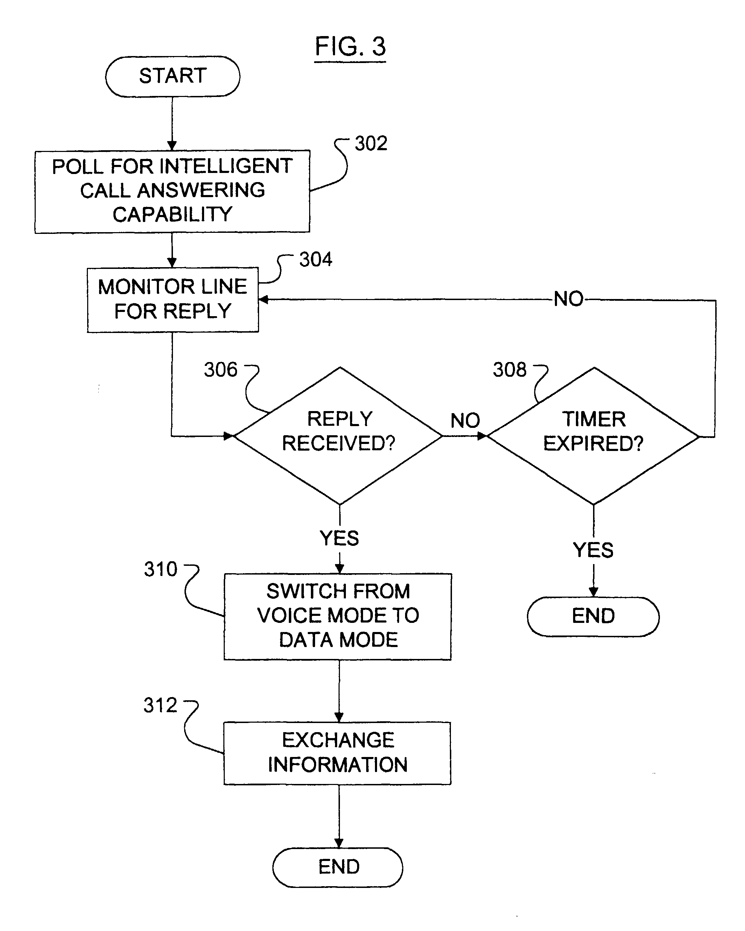

Turning to FIG. **3** which illustrates the logic followed by intelligent call handling system **102** for an outgoing call, the I-Beep procedure begins with polling a called call handling system for intelligent call handling capability (step **302**). This may involve, for example, sending a tone spectrum. Processor **116** then monitors the connection for a reply in accordance with an I-Beep protocol (step **304**). This reply could take the form of another tone spectrum. If a reply is not received (step **306**) before a timer expires (step 308), the I-Beep polling procedure is complete. If a reply is received, intelligent call handling system **102** switches from voice mode to data mode (step **310**). After switching modes, information exchange between intelligent call handling system **102** and I-Beep capable device **110** may proceed (step **310**). This may involve, for example, retrieving a URL from the I-Beep capable device.

It will be appreciated that the transfer of call control to the intelligent call handling device **102** (FIG. **1**) may occur in response to factors beyond that of busy or no-answer call results. For instance, intelligent call handling device **102** may take control of a call to a particular number based on time of day or calling line identification information.

An I-Beep may not be a tone or other sound, but instead an indication such as a light or a change in a liquid crystal display on a suitably equipped telephone station.

Other modifications will be apparent to those skilled in the art and, therefore, the invention is defined in the claims.

## Claims

1. A method for handling a call over a voice link comprising:
indicating over said voice link an intelligent information exchange capability;
receiving over said voice link an indication;
determining from said received indication whether a caller is a human caller or an intelligent machine with a compatible intelligent information exchange capability; and
further processing based on said determination.

2. The method of claim 1 wherein said indicating comprises generating a sound.

3. The method of claim 2 wherein said generating said sound comprises generating one or more tones.

4. The method of claim 1 wherein said indicating comprises generating an announcement modulated with data which may be extracted from said announcement.

5. The method of claim 1 wherein said further processing comprises sending a first set of data if said caller is a human caller and a second set of data if said caller is an intelligent machine.

6. A method for handling a call comprising:
indicating, to a communication apparatus, an intelligent information exchange capability;
receiving, from said communication apparatus, an indication of a compatible intelligent information exchange capability;
switching, responsive to said communication apparatus indication, from a voice mode to a data mode; and
sending data to said communication apparatus.

7. The method of claim 6 wherein said switching further comprises invoking a machine-to-machine protocol that facilitates said sending data to said communication apparatus.

8. The method of claim 6 further comprising, after said sending data to said communication apparatus, switching from said data mode to said voice mode.

9. A method for handling a call over a voice link, comprising announcing in a voice band over said link an intelligent information exchange capability with an announcement modulated with data which may be extracted from said announcement.

10. A call handling system comprising:
means for indicating over said voice link an intelligent information exchange capability;
means for receiving over said voice link an indication of a compatible intelligent information exchange capability;
means for determining from said received indication whether a caller is a human caller or an intelligent machine; and
means for processing based on said determination.

11. A computer readable medium for providing program control to a processor, said processor included in a call handling system, said computer readable medium adapting said call handling system to be operable to:
indicate over said voice link an intelligent information exchange capability;
receive over said voice link an indication of a compatible intelligent information exchange capability;
determine from said received indication whether a caller is a human caller or an intelligent machine; and
process based on said determination.
